# EUROPÄISCHE PATENTANMELDUNG

(11) **EP 4 311 979 A1**
(43) Veröffentlichungstag der Anmeldung: **31.01.2024**
(21) Anmeldenummer: 23185165.0
(22) Anmeldetag: 13.07.2023
(51) Int. Cl.: F21V 8/00, G02B 6/04

(54) **BELEUCHTUNGSMODUL**

(30) Priorität: 27.07.2022 DE 102022207724
(71) Anmelder: Uno Minda Europe GmbH, 80809 München (DE)
(72) Erfinder: BECK, Daniel, 83083 Riedering (DE); FALLER, Dominik, 85737 Ismaning (DE)
(74) Vertreter: MERH-IP Matias Erny Reichl Hoffmann Patentanwälte PartG mbB

(57) **Zusammenfassung**

Beleuchtungsmodul umfassend ein Basiselement 8, auf dem zumindest ein Leuchtmittel 7 angeordnet ist; ein lichtbündelndes Element 6, das dazu konfiguriert ist, das von dem Leuchtmittel 7 emittierte Licht zu kollimieren; eine Anzeigeeinheit 4, die dem lichtbündelnden Element im Strahlengang des von dem Leuchtmittel 7 emittierten Lichts 6 nachgeschaltet ist und dazu konfiguriert ist, das von dem Leuchtmittel 7 emittierte Licht wahlweise in Lichtleitfasern 1 einzukoppeln; und eine Vielzahl von Lichtleitfasern 1, wobei zumindest ein Pixel der Anzeigeeinheit 4 einer Lichtleitfaser 1 zugeordnet ist.

## Beschreibung

Der hier beschriebene Gegenstand bezieht sich auf ein Beleuchtungsmodul, das eine verbesserte Steuerbarkeit und Farbwiedergabe aufweist. Die Steuerbarkeit des Beleuchtungsmoduls wird insbesondere dadurch erhöht, dass Licht, das von zumindest einem Leuchtmittel abgestrahlt wird, über eine variabel steuerbare Anzeigeeinheit in eine Vielzahl von Lichtleitfasern eingekoppelt wird und somit die Intensität des aus den Fasern ausgekoppelten Lichtes frei wählbar ist. Ferner lässt sich die Lichttransmission der Anzeigeeinheit in bestimmten Ausgestaltungen des beschriebenen Gegenstandes farbselektiv steuern, womit eine verbesserte Farbwiedergabe und Steuerbarkeit der spektralen Zusammensetzung des in die Lichtleitfasern eingekoppelten Lichtes in Verbindung mit einem geeigneten Leuchtmittel erreichbar ist. Beispielsweise ermöglicht die vorliegende Vorrichtung, verbesserte dekorative Leuchtsysteme bereitzustellen, wie einen Sternenhimmel, bei dem unter anderem die Anzeige von Sternenbildern dynamisch geändert werden oder das Funkein von Sternen, wahlweise unter Einbeziehung farblicher Effekte, imitiert werden kann.

Des Weiteren ermöglicht der hier beschriebene Gegenstand durch die Zuordnung der auf der Oberfläche der Anzeigeeinheit angebrachten Lichtleitfasern zu einem oder mehreren Pixeln einen weniger komplexen Aufbau sowie einen verringerten Aufwand bei der Montage des Beleuchtungsmoduls.

### Hintergrund und Aufgabe

Als dekoratives Leuchtmittel sind Sternenhimmel bereits kommerziell erhältlich, die Kunststoff-Lichtleitfasern aufweisen, die mit einer einzelnen Leuchtquelle verbunden sind. Beispielsweise zeigt die EP 1102 231 A1 eine solche Vorrichtung. Die Lichtleitfasern sind an einem Ende zu einem Bündel zusammengefasst und derart an die einzige Leuchtquelle angeschlossen, dass Licht von der Leuchtquelle in die Fasern eingespeist wird. Das eingespeiste Licht tritt an den gegenüberliegenden Enden aus den Faserenden aus, so dass je Faser ein Lichtpunkt sichtbar ist. Die Faserenden werden in einem Träger montiert, so dass der Gesamteindruck eines Sternenhimmels entsteht, wobei jeder Lichtpunkt einem Stern entspricht. Durch unterschiedliche Maßnahmen können zusätzliche visuelle Effekte erzielt werden, beispielsweise werden mittels sich drehender Farb- bzw. Effekt-Scheiben zwischen Lichtquelle und Faserbündel dynamische Effekte erzeugt werden.

In der Gebrauchsmusterschrift DE 20 2013 011 362 wird ferner eine Vorrichtung zur Aufnahme einer Vielzahl von Lichtleitfasern gezeigt, bei der in jede der Lichtleitfaser separat Licht eingespeist werden kann, um dekorative Leuchtsysteme zur Verwirklichung eines Sternenhimmels im Innerraum eines Kraftfahrzeugs bereitzustellen. Die dort gezeigte Vorrichtung zur Aufnahme von Lichtleitfasern umfasst ein Basiselement und ein Abdeckungselement, das eine Vielzahl Durchgangsöffnungen aufweist. Des Weiteren ist eine Vielzahl Leuchtmittel und eine Vielzahl Lichtleitfasern vorgesehen. Es ist jeweils zumindest ein Abschnitt zumindest einer Lichtleitfaser in einer Durchgangsöffnung des Abdeckungselementes angeordnet. Ferner sind die Leuchtmittel zwischen dem Basiselement und dem Abdeckungselement auf einer Oberfläche des Basiselementes angeordnet und es ist jeweils zumindest ein Leuchtmittel einer Durchgangsöffnung zugeordnet.

Nachteilig ist bei den bekannten Leuchtvorrichtungen, dass nur eingeschränkte Gestaltungsmöglichkeiten vorhanden sind und beispielsweise bei der Darstellung eines Sternenhimmels mit dekorativen Farbeffekten oder einer verbesserten Farbwiedergabe beziehungsweise Farbsättigung zusätzlicher konstruktiver und steuerungstechnischer Aufwand notwendig wird. Der Wegfall eines aufwendigen elektronischen Ansteuerns einzelner Leuchtmittel anhand komplexer elektronischer Steuerelemente kann bei den bekannten Vorrichtungen nicht ermöglicht werden.

Ferner ist es nachteilig, dass die Montage von bekannten Leuchtvorrichtungen, wie sie beispielsweise in der DE 20 2013 011 362 beschrieben werden, zu einem erhöhten Montageaufwand und Platzbedarf führen. So muss jede Lichtleitfaser an genau einer spezifisch vorbestimmten Einbauposition montiert werden, so dass die Montage komplex und aufwendig ist.

Es ist somit eine Aufgabe des hier beschriebenen Gegenstandes, ein Beleuchtungsmodul bereitzustellen, das eine präzise kontrollierbare Einkopplung von Licht in Lichtleitfasern bei gleichzeitig vereinfachter Montage sowie Ansteuerung besagter Lichtleitfasern ermöglicht. Dies wird durch den Gegenstand gemäß Anspruch 1 erreicht. Bevorzugte Weiterentwicklungen werden von den abhängigen Ansprüchen beschrieben.

### Beschreibung

Die Verwendung einer Anzeigeeinheit mit genau regelbaren Transmissionseigenschaften bietet unter anderem den technischen Vorteil eines "Lichtventils" über das die Einkopplung von Licht, das aus einer konstant betriebenen durch Leuchtmittel realisierten Hintergrundbeleuchtung stammt, geregelt wird.

Die hier offenbarte Vorrichtung eines Beleuchtungsmoduls kann ein Basiselement umfassen, auf dem zumindest ein Leuchtmittel angeordnet ist, sowie eine Anzeigeeinheit. Weiter kann ein lichtbündelndes Element, das dazu konfiguriert ist das von dem zumindest einen Leuchtmittel emittierte Licht zu kollimieren, vorgesehen sein. Ferner kann die Anzeigeeinheit im Strahlengang des von dem zumindest einen Leuchtmittel emittierten Lichts dem lichtbündelnden Element nachgeschaltet sein und dazu konfiguriert sein, das von dem zumindest einen Leuchtmittel emittierte Licht wahlweise in eine Vielzahl von Lichtleitfasern einzukoppeln. Es kann zumindest ein Pixel der Anzeigeeinheit einer Lichtleitfaser zugeordnet sein.

Hierbei bedeutet das wahlweise Einkoppeln von Licht in eine Vielzahl von Lichtleitfasern, dass besagtes Licht wahlweise durch die Ansteuerung einzelner Pixel der Anzeigeeinheit durch die Anzeigeeinheit transmittiert wird, um im Folgenden in die Lichtleitfasern eingekoppelt zu werden. Genauer gesagt bedeutet der Begriff "wahlweise" in diesem Zusammenhang bevorzugt, dass die Anzeigeeinheit eine variable und zwischen 0% und 100% wählbare Transmission des von den Leuchtmitteln erzeugten Lichtes zu den Lichtleitfasern ermöglicht. Dies kann insbesondere und beispielsweise durch eine Flüssigkristallanzeige verwirklicht werden.

Mit nochmals anderen Worten: der Begriff "wahlweise" bedeutet in diesem Zusammenhang bevorzugt, dass die Anzeigeeinheit hinsichtlich ihrer Transmissionseigenschaften derart gesteuert werden kann, dass auf der den Leuchtmitteln zugewandten Seite eingeleitetes Licht wahlweise gar nicht oder in beliebig kleinen Abstufungen vollkommen zu der den Lichtleitfasern zugewandten Seite der Anzeigeeinheit transmittiert wird, um dort gegebenenfalls in die Lichtleitfasern einzukoppeln.

Der Ausdruck "nachgeschaltet" ist bevorzugt so zu verstehen, dass sich die optische Linse zwischen der auf dem Basiselement angeordneten Vielzahl von Leuchtmitteln und der Anzeigeeinheit befindet, wobei weitere Zwischenelemente vorgesehen sein können oder auch nicht. Das von den Leuchtmitteln emittierte Licht trifft ungerichtet auf die Unterseite der Linse und wird aufgrund der Linsengeometrie in einer Art und Weise gebrochen, dass kollimiertes Licht auf die den Leuchtmitteln zugewandte Seite der Anzeigeeinheit trifft, um dort in einem möglichst rechtwinkligen Einfallswinkel in die Anzeigeeinheit einzutreten. Die optische Linse kann dabei eine Kollimatorlinse aus einem geeigneten für sichtbares Licht transparentem Material sein.

Bevorzugt ist des Weiteren eine Anzahl von Lichtleitfasern vorzusehen, die kleiner als oder gleich der Anzahl der Pixel der Anzeigeeinheit ist.

Besonders bevorzugt können das Basiselement und die Anzeigeeinheit derart zueinander angeordnet sein, dass sie im Wesentlichen parallel zueinander verlaufen, sodass jeweils eine Längsachse mit der Transmissionstrecke eines Pixels der Anzeigeeinheit mit dem durch eine lichtbündelndes Element kollimierten Licht des Leuchtmittels im Wesentlichen zusammenfällt. Dies bedeutet, dass jeder Lichtleitfaser, die über einem oder vorzugsweise mehreren Pixeln angeordnet ist, ein Leuchtmittel zugeordnet ist und dass das Leuchtmittel Licht abstrahlt, das dann durch die Anzeigeeinheit in die zugeordnete Lichtleitfaser eingekoppelt wird. Mit anderen Worten ist das zumindest eine Leuchtmittel so angeordnet, dass ein (Haupt-)teil des von einem Leuchtmittel abgestrahlten Lichtes auf im Wesentlichen gerader Linie in die Anzeigeeinheit beziehungsweise die Lichtleitfaser eingestrahlt wird. Mit nochmals anderen Worten stimmt die (Haupt-)Abstrahlrichtung des Lichtes eines Leuchtmittels mit der Transmissionsachse der Anzeigeeinheit und ebenfalls mit der Längsachse der Lichtleitfaser in dem Bereich, in den das von der Anzeigeeinheit transmittierte Licht eingekoppelt wird, überein.

Gemäß der vorliegenden Offenbarung ist es eine Variante, zumindest ein Leuchtmittel vorzusehen, dessen Licht durch zumindest ein Pixel der Anzeigeeinheit in eine Lichtleitfaser eingekoppelt wird. Dadurch ergeben sich vielfältige Möglichkeiten jede Lichtleitfaser separat anzusteuern beziehungsweise Licht in diese einzukoppeln. Dies umfasst weiterhin auch beispielsweise die Möglichkeit, die Lichtmenge und die Spektralverteilung des Lichtes, das in jede Faser eingekoppelt wird, einzeln zu steuern. Durch individuelle Steuerung der LichtTransmission jedes Pixels der Anzeigeeinheit können so unterschiedlichen Muster wie zum Beispiel Sternenbilder dargestellt werden, anstatt sie durch die nicht variable Einkopplung des Lichtes einer oder mehrerer Lichtquellen von vorneherein festzulegen. Ferner können dadurch dynamische Effekte und Farbverläufe ermöglicht werden. So kann zum Beispiel das Funkeln der Sterne imitiert werden, indem zufällige Sterne unregelmäßig in ihrer Helligkeit moduliert werden oder ein weitererreichender dekorativer Effekt durch unterschiedliche Farbsättigung oder unterschiedliche farbliche Gestaltung der Sternenbilder erreicht werden. Falls die Pixelgröße (Querschnitt, Durchmesser) in einer besonders bevorzugten Ausgestaltung des beschriebenen Gegenstandes kleiner oder deutlich kleiner sein sollte als der Faserdurchmesser, so können auch mehrere Pixel einer Faser zugeordnet werden, was durch eine Ansteuerungsanpassung der Anzeigeeinheit bzw. deren Pixel ohne größeren Zusatzaufwand in vorteilhafter Weise kontrolliert werden kann, wie weiter unten beschrieben wird.

Die hier offenbarte Vorrichtung hat zudem den Vorteil, dass keine zusätzlichen komplexen Steuermittel notwendig sind, um dynamische Effekte oder bestimmte Leuchteffekte, wie zum Beispiel komplexe, farbige oder wechselnde Sternenbilder darzustellen, da jede Lichtleitfaser zumindest einem Pixel der Anzeigeeinheit einzeln zugeordnet ist. Somit kann über ein entsprechendes Kontrollschema der einzelnen Pixel der Anzeigeeinheit die Darstellung eines Sternenhimmels realisiert werden, ohne die Intensität beziehungsweise die spektrale Zusammensetzung des von dem zumindest einem Leuchtmittel emittierten Lichtes ändern zu müssen. Dadurch wird der steuerungstechnische, für den Betrieb des Beleuchtungsmoduls notwendige Aufwand reduziert.

Ferner kann der Faserdurchmesser der Lichtleitfaser die Größe der Pixel der Anzeigeeinheit (um ein Mehrfaches) übersteigen, wobei das von einer Vielzahl von Pixeln abgestrahlte Licht in eine einzelne Lichtleitfaser eingekoppelt wird. Dadurch ist es möglich, eine von einer Vielzahl von Pixeln abgestrahlte Lichtmenge in nur eine Faser einzukoppeln. Dementsprechend ist nur eine Faser nötig, um eine vergleichsweise große Lichtmenge zu übertragen. Diese Ausgestaltung ermöglicht es, eine geringere Anzahl an Fasern bei gleichzeitig, durch die gesteigerte Anzahl an Pixel beziehungsweise Subpixeln, erhöhter Steuerbarkeit und Intensität des eingekoppelten Lichtes zu verwenden. Mit anderen Worten: Eine Einkopplung von Licht aus mehreren Pixeln ermöglicht es, die spektralen Eigenschaften und die Intensität des in die Faser einzukoppelnden Lichtes besser zu kontrollieren. Vorteilhaft bei dieser Ausführungsform ist ferner, die vereinfachte Herstellung des hier offenbarten Leuchtmoduls aufgrund der Verwendung einer reduzierten Anzahl an zudem, aufgrund ihres gesteigerten Durchmessers, robusteren Lichtleitfasern. Dadurch kann der Montage- und Herstellungsaufwand reduziert werden und ein zuverlässigeres, gegenüber äußeren mechanischen Einflüssen wie Vibrationen und Schlägen widerstandsfähigeres Beleuchtungsmodul verwirklicht werden.

Hierbei ist unter dem Begriff Pixelgröße oder Größe der Pixel der Anzeigeeinheit bevorzugt der sich aus den zweidimensionalen Abmessungen der Pixel an der Oberfläche der Anzeigeeinheit ergebende Querschnitt beziehungsweise Durchmesser oder die Fläche der Pixel zu verstehen.

Hinsichtlich der Reduzierung des Montage- und Herstellungsaufwandes des beschriebenen Beleuchtungsmoduls gemäß der zuvor beschriebenen Konfiguration ist als besonders vorteilhaft zu erwähnen, dass die Zuordnung von Lichtleitfasern und Pixeln der Anzeigeeinheit auch zuverlässig vorgenommen werden kann, wenn die Lichtleitfasern in einem Bündel auf der Oberfläche der Anzeigeeinheit angebracht werden ohne eine zuvor festgelegte spezifische Positionierung des Faserbündels in Relation zu der Pixelmatrix der Anzeigeeinheit vorzunehmen. Mit anderen Worten, durch die Anbringung eines Faserbündels, das aus Lichtleitfasern besteht deren Durchmesser die Größe der Pixel der Anzeigeeinheit übersteigt kann sichergestellt werden, dass auch bei einer zufälligen Anordnung der Lichtleitfasern auf der Oberfläche der Anzeigeeinheit Licht aus zumindest einem Pixel in jede der Lichtleitfasern eingekoppelt werden kann. Mit nochmals anderen Worten, bedingt durch die Größe des Faserdurchmessers der jeweiligen Lichtleitfasern des Faserbündels wird sichergestellt, dass immer zumindest ein Pixel der Anzeigeeinheit mit seiner kompletten Oberfläche unterhalb einer Lichtleitfaser angeordnet ist. Folglich ist bei der Anbringung der Lichtleitfasern kein zusätzlicher Arbeitsschritt zur genauen Positionierung der Fasern auf der Anzeigeeinheit mehr nötig, da eine zuverlässige Einkopplung des durch die Anzeigeeinheit transmittierten Lichts in die Lichtleitfasern auch bei zufälliger Anordnung der Lichtleitfasern eines Faserbündels auf der Oberfläche der Anzeigeeinheit sichergestellt ist.

Somit bietet die oben beschriebene Konfiguration bei der der Faserdurchmesser der Lichtleitfasern die Pixelgröße der Anzeigeeinheit übersteigt den Vorteil, dass eine Ferrule in der ein Bündel von Lichtleitfasern angeordnet ist keine speziellen Voraussetzungen hinsichtlich der Platzierung auf der Oberfläche der Anzeigeeinheit erfüllen muss. Dadurch, dass der Faserdurchmesser die Größe der Pixel der Anzeigeeinheit überschreitet, ist immer mindestens ein Pixel vorhanden das mit seiner ganzen Fläche zur Verfügung steht, um Licht in eine der Lichtleitfasern einzukoppeln. Die Zuordnung der Pixel die ihr Licht in die Lichtleitfaser einkoppeln kann durch einen im Folgenden noch beschriebenen Kalibrierungsschritt festgelegt werden. Die Montage des Faserbündels auf der Oberfläche der Anzeigeeinheit wird somit wesentlich vereinfacht.

Ferner kann die Anzeigeeinheit der hier offenbarten Vorrichtung eine monochrome Flüssigkristallanzeige (LCD) sein. Dabei bietet der Einsatz einer monochromen Flüssigkristallanzeige die Vorteile eines vergleichsweisen einfachen Aufbaus, da keine Farbfilter oder Subpixel notwendig sind. Dementsprechend kann auch die Steuerung einer solchen Anzeigeeinheit weniger komplex ausgeführt werden, da nur die Transmission des gesamten in die Anzeigeeinheit eingespeisten Lichtes reguliert wird und somit eine einzelne Ansteuerung von farbigen Subpixeln entfällt. Durch den Einsatz einer Flüssigkristallanzeige zur Regulierung der Lichtmenge, die in die Lichtleitfasern eingekoppelt werden soll, kann somit eine präzise Kontrolle der Menge, des durch die Anzeigeeinheit transmittierten Lichtes erreicht werden. Eine komplexe Steuerung der Helligkeiten der einzelnen Leuchtmittel wird somit überflüssig.

Ferner kann die Anzeigeeinheit der hier offenbarten Vorrichtung als mehrfarbige Flüssigkristallanzeige (LCD) ausgeführt sein. Der Einsatz einer mehrfarbigen Flüssigkristallanzeige ist besonders vorteilhaft in Hinblick auf die Regulierung der spektralen Zusammensetzung des transmittierten Lichtes. Farbige Subpixel ermöglichen somit eine genaue Steuerung der Farbsättigung beziehungsweise der Lichtfarbe des in die Lichtleitfaser eingekoppelten Lichtes. Dadurch lassen sich farbliche Effekte oder die durch den Betrachter empfundene subjektive Helligkeit der einzelnen Sterne/Leuchtpunkte noch feiner durch die variable Farbtemperatur justieren beziehungsweise ein noch realistischeres Abbild eines nächtlichen Sternenhimmels erzeugen.

Ferner kann das Leuchtmittel eine lichtemittierende Diode (LED) sein. Durch die Verwendung von effizienten wie Lichtquellen wie LEDs kann ein Beleuchtungsmodul bereitgestellt werden, das angesichts der angestrebten Verbrauchsreduzierungen im automobilen Umfeld besonders vorteilhaft ist. Des Weiteren sind LEDs in einer Vielzahl von Ausführungsformen in Hinblick auf ihre Emissionscharakteristika erhältlich, wodurch das Emissionsspektrum auf das Anforderungsprofil des offenbarten Beleuchtungsmoduls sehr gut angepasst werden kann. Darüber hinaus sind lichtemittierende Dioden aufgrund ihrer kompakten Abmessungen besonders dafür geeignet, ein kompaktes und im Fahrzeuginneren wenig Bauraum einnehmendes Beleuchtungsmodul zu verwirklichen. Weitere Vorteile sind ferner, dass die bevorzugte Lichtfarben für die Abbildung eines Sternenhimmels durch LEDs präzise, d.h. ohne große Abweichungen erzeugbar sind und dass durch entsprechende Ansteuerung der Anzeigeeinheit der Eindruck eines funkelnden Sternenhimmels noch realistischer dargestellt werden kann.

In Verbindung mit einer mehrfarbiger Flüssigkristallanzeige ist die Verwendung von LEDs besonders vorteilhaft, da sich so beispielsweise aus der Kombination einer einfarbigen weißen LED und einer mehrfarbigen Flüssigkristallanzeige eine besonders realistische Lichtfarbe oder besonders große Freiheit in der Wahl dekorativer Farbeffekte bei der Darstellung des Sternenhimmels bietet.

Ferner kann das Leuchtmittel eine Multi-Chip LED(-Modul) sein. Multi-Chip LED bieten, analog zum Beispiel einer einfarbigen weißen LED, die zuvor beschriebenen Vorteile hinsichtlich Effizienz, Robustheit und kompakten Abmessungen. Zusätzlich können durch die Verwendung einer Multi-Chip LED als Leuchtmittel alle Farben des sichtbaren Spektrums erzeugt werden. Dadurch wird die Farbsättigung frei wählbar, was zur Erzeugung von für den Betrachter noch farbintensiveren dekorativen sowie auch noch realistischeren Effekten bei der Darstellung eines Sternenhimmels bzw. von Sternbildern genutzt werden kann.

In Verbindung mit einer monochromen Anzeigeeinheit ist die Verwendung von Multi-Chip LEDs besonders vorteilhaft, da so das in der Multi-Chip LED vorab gemischte Licht einer beliebigen Farbe ohne Farbfilter direkt in die Anzeigeeinheit zur Regulierung der Intensität des im Folgenden in die Lichtleitfasern eingekoppelten Lichtes eingestrahlt werden kann. Dadurch kann die Effizienz bzw. die Lichtausbeute des offenbarten Beleuchtungsmoduls weiter gesteigert werden. Alternativ oder zusätzlich kann das Leuchtmittel auch mehrere LEDs aufweisen.

Ferner kann die Lichtleitfaser ein Glasfaser-Lichtwellenleiter sein. Die Verwendung von Glasfasern als Lichtleitfaser hat den Vorteil einer hohen Qualität bei der Lichtleitung, da Glasfasern geringe Ausbreitungsverluste von Licht, das innerhalb der Fasern geleitet wird, aufweisen. Ferner weisen Glasfasern eine geringe Dispersion auf und zeigen geringe Dämpfung der eingekoppelten Lichtwellen. Somit wird eine präzisere Übertragung des in die Lichtleitfasern eingekoppelten Lichts erreicht und unerwünschte Farbverschiebungen können vermieden werden.

Ferner kann die Lichtleitfaser eine polymeroptische Faser (POF) sein. Die Verwendung von POFs als Lichtleitfaser ist in Hinblick auf die mit diesen Fasern realisierbaren engen Verlegungsradien und ihrer Unempfindlichkeit gegenüber Stößen und Vibrationen vorteilhaft. Ferner kann der Montage- und Herstellungsaufwand des Beleuchtungsmoduls durch die einfache Konfektionierbarkeit und unproblematische Kombination mit Endstücken oder Steckern sowie die vergleichsweise kostengünstige Herstellung von POFs reduziert werden.

Dabei ist der Einsatz von POFs angesichts der mechanischen Flexibilität und möglichen Biegungsradien besonders vorteilhaft, da so ein besonders kompaktes und Vibrationen und Stößen gegenüber unempfindliches Beleuchtungsmodul hergestellt werden kann. Ferner lassen sich der Herstellungsaufwand und der Montageaufwand aufgrund der vergleichsweise einfachen Möglichkeiten POFs in einem Stecker beziehungsweise einer Hülse anzuordnen reduzieren.

Ferner kann eine Halterung zur Aufnahme eines lichtbündelnden Elements zwischen dem Basiselement und der Anzeigeeinheit angeordnet sein. Die Halterung dient zur Aufnahme und räumlichen Fixierung der Bauteile.

Ferner kann die Halterung ein Trennelement aufweisen, das dazu konfiguriert sein kann, das zumindest eine Leuchtmittel lichtdicht einzufassen und wobei das Leuchtmittel in einer von dem lichtbündelnden Element dem Trennelement begrenzten Aussparung der Halterung zugeordnet ist.

Ferner können auf dem Basiselement eine Vielzahl von Leuchtmitteln angeordnet sein. In diesem Fall verhindert das Trennelement, dass Streulicht von einem Leuchtmittel in einen benachbarten, diesem Leuchtelement nicht zugeordneten Bereich des dem Basiselement zugewandten Seite der Anzeigeeinheit einfällt und so in eine dem Leuchtmittel nicht zugeordnete Lichtleitfaser eingekoppelt wird. Dies ist besonders vorteilhaft, wenn benachbarte Lichtleitfasern im Zuge der Darstellung eines bestimmten Sternbildes nicht oder mit wenig Licht versorgt werden sollen, beziehungsweise wenn Streulicht von benachbarten Leuchtmitteln daran gehindert werden soll, sich durch umliegende Pixel der Anzeigeeinheit auszubreiten. Dementsprechend kann die Halterung eine Vielzahl von Aussparungen aufweisen, die dazu geeignet sein können, zumindest ein Leuchtmittel innerhalb der Aussparung anzuordnen. Die Halterung kann einstückig oder mehrteilig ausgeführt sein. Durch die hier beschriebene Ausführung der Halterung kann besonders effektiv verhindert werden, dass Streulicht von zueinander benachbarten Leuchtmitteln in die Unterseite, der den benachbarten Leuchtmitteln zugeordneten Pixel der Anzeigeeinheit, eingestrahlt wird.

Ferner kann sich jeweils ein lichtbündelndes Element in der Aussparung der Halterung über dem zumindest einen Leuchtmittel befinden. Dies ist besonders vorteilhaft, um einen kompakten Aufbau des Beleuchtungsmoduls zu gewährleisten. Da beispielsweise eine optische Linse so direkt in der Aussparung platziert werden kann, kann dadurch für alle Leuchtmittel des hier offenbarten Beleuchtungsmoduls eine reproduzierbare Anordnung zwischen dem Basiselement mit der Vielzahl von Leuchtmitteln und der Anzeigeeinheit bereitgestellt werden. Daher werden geometrische Abweichungen hinsichtlich des in die Anzeigeeinheit eingestrahlten Lichtes minimiert und es wird somit eine uniforme Lichtintensität der durch die Leuchtmittel bereitgestellt Hintergrundbeleuchtung für die Anzeigeeinheit ermöglicht. Ferner erleichtert sich dadurch die Montage des Beleuchtungsmoduls, da alle optischen Linsen in einer standardisierten Aussparung angeordnet werden können.

Ferner kann eine Vielzahl von Lichtleitfaser in einer Ferrule als Bündel angeordnet auf der dem zumindest einen Leuchtmittel abgewandten Oberfläche der Anzeigeeinheit befestigt sein. Die Ferrule stellt eine Passung für die Lichtleitfasern dar, die aufgrund ihrer mechanischen Eigenschaften und Geometrie eine verbesserte Einkopplung von Licht in die Lichtleifasern ermöglicht. Dabei ist Einsatz einer Ferrule in Verbindung mit Lichtleitfasern aus Glasfaser besonders vorteilhaft, da aufgrund der präzisen Passung und mechanischen Unterstützung am Befestigungspunkt der Lichtleitfaser eine zuverlässigere und genauere Montage der Lichtleitfasern über den Pixeln der Anzeigeeinheit ermöglicht werden kann. Des Weiteren ist der Einsatz einer Ferrule besonders vorteilhaft, da somit die präzise Passung mittels Ferrule die Reduktion von Fehlstellungen der Fasern beziehungsweise Einkoppelverluste ermöglicht. Außerdem kann durch den Einsatz von Ferrulen zur Fixierung der Lichtleitfasern auf der Oberfläche der Anzeigeeinheit auf das Einkleben der Fasern in eine Lochplatte oder dergleichen und den damit verbundenen zusätzlichen Fertigungsschritt verzichtet werden. Die Ferrule wird hier besonders bevorzugt als eine Umfassung für das Bündel Lichtleitfasern verstanden und sie kann bevorzugt ringförmig sein, wobei die Querschnittsform nicht notwendigerweise rund sein muss. Die Querschnittsform kann auch oval, rechteckig, mehreckig oder ähnlich ausgestaltet sein. Die Ferrule weist bevorzugt die Querschnittsform auf, die in einer Längsachsenrichtung extrudiert ist, um einen dreidimensionalen Körper zu erhalten. Die Innenabmessungen der Aussparung sind kleiner als die Außenabmessungen des Querschnittes, so dass eine relativ dünne Wandung entsteht. Die Länge der Ferrule in der Längsachse ist derart gewählt, dass die Lichtleitfasern möglichst knickfrei gehalten werden können.

Bei einer Ferrule in der die Lichtleitfasern als Bündel von einer Vielzahl von Fasern angeordnet sind, kann Licht bei einem Faserdurchmesser, der die Pixelgröße übersteigt, zuverlässig und verlustfrei in die Lichtleitfasern eingekoppelt werden. Dadurch wird eine verbesserte Effizienz bei der Lichtübertragung erreicht, da aus mehreren Pixeln eingekoppelt werden kann und somit etwaige Verluste bei der Einkopplung aufgrund des gesteigerten Lichtstroms weniger stark auswirken. Vorteilhaft an dieser Anordnung ist ferner, dass bei der Herstellung des Beleuchtungsmoduls weniger strenge Toleranzen hinsichtlich der Positionierung der Lichtleitfasern eingehalten werden müssen, weil bei einer Vielzahl von Pixeln, die Licht in eine Faser einkoppeln, leicht Abweichungen einzelner Fasern hinsichtlich der Positionierung über den Pixeln kompensiert werden können.

Besonders vorteilhaft ist dementsprechend der Einsatz einer Ferrule in Kombination mit einem Bündel aus polymeren optischen Fasern, da diese bei der Herstellung aufgrund ihrer mechanischen Eigenschaften leicht in einer Ferrule zusammengefasst werden können, um die zuvor genannten Vorteile zu erreichen.

Ferner kann das von dem zumindest einen Leuchtmittel emittierte Licht über eine Mischstrecke an der dem Leuchtmittel zugewandten Oberfläche der Anzeigeeinheit in die Anzeigeeinheit eingeleitet werden. Hier ist eine Mischstrecke als optischer Zylinder zu verstehen, dessen Innenseite mit einem möglichst verlustfrei Licht reflektierenden Material beschichtet ist und entlang seiner Längsachse durch in seinem Inneren auftretende Reflektion von Licht, dessen Ausbreitungsrichtung stark von besagter Längsachse abweicht, eine Korrektur von aus einem Leuchtmittel austretendem Streulicht bewirkt, um eine verbesserte Lichteinkopplung in die Lichtleitfasern zu erreichen. Dies ist besonders vorteilhaft, für den Fall, dass beispielsweise der Emitterabstand eines Multi-Chip LED-Moduls die Größe der Pixel oder insbesondere der Anordnung farbiger Subpixel die ein Pixel der Anzeigeeinheit bilden überschreitet. Mit anderen Worten, kann durch die Mischtrecke Licht, das an den Rändern des Multi-Chip LED-Modulsaustritt und somit nicht in das Pixel der Anzeigeeinheit, das nur einen Teil des Pixels abdeckt, eingekoppelt werden könnte, dem Pixel trotzdem zugeführt werden.

Ferner kann das lichtbündelnde Element ein Reflektor und/oder zumindest eine optische Linse sein. Durch den Einsatz eines der jeweiligen Ausführungsform entsprechenden lichtbündelnden optischen Elementes ist es möglich, dass von dem Leuchtmittel beziehungsweise den Leuchtmitteln emittierte Licht so zu leiten, dass es möglichst homogen und unidirektional in die Pixel der Anzeigeeinheit für die variable Transmission zu den Lichtleitfasern eingespeist werden kann. Dabei kann auch eine Kombination von optischen Linsen und Reflektoren zum Einsatz kommen, um eine für die Einleitung in die Anzeigeeinheit bevorzugte Lichtverteilung zu ermöglichen.

Zusammenfassend ermöglicht es der beschriebene Gegenstand, dass das Beleuchtungsmodul derart anordenbar bzw. verwendbar ist, dass mittels der Lichtleitfaserenden, die von der Anzeigeeinheit abgewandt angeordnet sind, Lichtfiguren mittels der durch jedes Ende einer Lichtleitfaser erzeugten Lichtpunktes flexibel erstellt werden können. Eine mögliche Anwendung ist hier beispielsweise die Erzeugung eines Abbildes eines Sternenhimmels in einem Kraftfahrzeug oder an Gebäudedecken oder dgl., der sogar bevorzugt das Funkeln von einzelnen Sternen imitieren kann, bei dem die Anzeige von Sternenbildern dynamisch verändert werden kann und/oder bei dem die Helligkeit einzelner Sterne separat einstellbar ist. Ferner ist es weiterhin möglich, die Farbgestaltung der gezeigten Sternenbilder auf eine besonders dekorative oder realistische Art und Weise darzustellen. Insofern ist der Begriff Beleuchtungsmodul bzw. Beleuchtung hier derart zu verstehen, dass die freien Enden der Lichtleitfasern dazu genutzt werden, mittels der von diesen erzeugten Lichtpunkten, zweidimensionale Abbildungen darzustellen, die insbesondere dekorativer Natur sind. Neben Sternenbildern bzw. Abbildungen davon, lässt sich dieses Prinzip auch auf beliebige andere Darstellungen anwenden.

Mit anderen Worten: Der hier beispielhaft angeführte Sternenhimmel kann dadurch ermöglicht werden, dass die hier offenbarte Vorrichtung in einem Innenraum, z. B. eines PKWs, montiert wird, wobei die Kompaktheit der hier beschrieben Vorrichtung von technischem Vorteil für die Montage und Unterbringung ist, und mittels der beleuchteten freien Enden der aus der Vorrichtung herausragenden Lichtleitfasern jeweils ein Stern imitiert wird. Diese freien Enden können beispielsweise in kleine Bohrungen einer Wandverkleidung des Innenraums eingeführt werden, so dass auf einer sichtbaren Seite der Wandverkleidung der Lichtpunkt des freien Endes des Lichtleiters für einen Betrachter sichtbar ist. Die Anordnung der einzelnen freien Enden bzw. der Lichtpunkte ermöglicht dann das Abbilden von Sternenbilder oder dgl. Selbstverständlich können auch mehrere Lichtleitfasern zu einem Bündel zusammengefasst werden, so dass die Größe der Lichtpunkte bzw. Sterne und deren Helligkeit zusätzlich modifizierbar sind. Andere Anwendungen in Gebäuden oder anderen Fahrzeugen sind selbstverständlich ebenfalls möglich.

Somit wird eine verbessertes und leichter montierbares bzw. zusammenbaubares Beleuchtungselement bereitstellt, das mit geringerem Steuerungsaufwand eine separat geregelte Lichteinkopplung in eine einzelne Lichtleitfaser der Vielzahl von Lichtleitfasern ermöglicht. Dies erlaubt es, verbesserte dekorative Lichtsysteme bereitzustellen, wie den oben beschriebenen Sternenhimmel mit funkelnden Sternen.

Der beanspruchte Gegenstand wird im Folgenden exemplarisch mit Bezug auf die beigefügten, schematischen Zeichnungen beschrieben. Es zeigen
Fig. 1 einen Teil eines Querschnitts der Vorrichtung gemäß einem Beispiel,
Fig.2A bis 2C die Pixel-Faser-Zuordnung der Vorrichtung gemäß einem Beispiel.

Im Folgenden werden verschiedene Beispiele der vorliegenden Erfindung detailliert unter Bezugnahme auf die Figuren beschrieben. Gleiche bzw. ähnliche Elemente in den Figuren werden hierbei mit gleichen Bezugszeichen bezeichnet. Die vorliegende Erfindung ist jedoch nicht auf die beschriebenen Ausführungsmerkmale begrenzt, sondern umfasst weiterhin Modifikationen von Merkmalen der beschriebenen Beispiele und Kombination von Merkmalen verschiedener Beispiele im Rahmen des Schutzumfangs der unabhängigen Ansprüche.

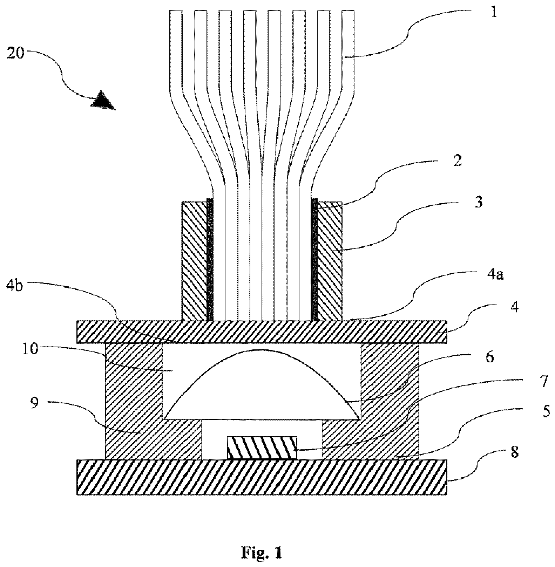

Fig. 1 zeigt einen Teil eines Querschnitts eines Beispiels des beanspruchten Beleuchtungselements. Der Querschnitt zeigt eine Platine **8** als plattenförmiges Element, auf der ein Leuchtmittel bzw. eine Lichtquelle **7** angeordnet ist. Das gezeigte Leuchtmittel **7** ist bevorzugt zumindest eine Leuchtdiode oder ein LED-Modul, das beispielsweise eine Chip-on-Board (COB) oder Surface-Mounted-Device (SMD) Architektur aufweist. Es können auch mehrere Leuchtmittel **7**, die in einer Matrix von n Reihen und m Spalten angeordnet sind, verwendet werden. Das Platine **8** ist besonders bevorzugt eine Leiterplatte, auf der Leiterbahnen (nicht gezeigt) angeordnet sind und auf der die Leuchtdiode beziehungsweise die Leuchtdioden befestigt sind, so dass die Leuchtdiode beziehungsweise die Leuchtdioden elektrisch ansteuerbar sind. Auf zumindest einer der beiden Oberflächen der Platine **8**, d.h. auf der Vorder- und/oder der Rückseite der Platine **8**, können weitere elektronische Bauteile, beispielsweise elektronische Ansteuermittel vorgesehen sein, die zum Ansteuern bzw. den Betrieb der Leuchtmittel **7** geeignet sind. Die Ansteuermittel können u. a. einen oder mehrere Mikrocontroller umfassen. Ferner kann die Platine **8** auch seitlich über ein Trennelement **9** hinausragen, so dass der seitlich herausragende Teil der Platine **8** eine freie Oberfläche zur Anordnung der elektronischen Ansteuermittel bietet. Ferner ist es eine weitere Möglichkeit, die Ansteuerelektronik auf einer gesonderten Leiterplatine anzuordnen und die Platine **8** mittels einer flexiblen Verbindungsleitung mit der gesonderter Leiterplatine und der darauf angeordneten Ansteuerelektronik zu verbinden.

Gemäß einem weiteren Beispiel sind die Leiterbahnen auf einer Oberfläche der Platine **8** angeordnet, die im montierten Zustand des Beleuchtungsmoduls **20** in Richtung der Halterung **5** angeordnet ist. Mit anderen Worten sind die Leiterbahnen und Leuchtmittel 7 auf einer nach innen (in Relation zur montierten Vorrichtung) ausgerichteten Oberfläche angeordnet.

Das lichtbündelnde Element **6** befindet sich wie in Figur 1 gezeigt über dem Leuchtmittel **7** und weist für die Verwendung in dem Beleuchtungsmodul **20** geeignete optische Eigenschaften sowie eine Geometrie, die es ermöglicht gemäß den Abmessungen der Aussparung **10** und dem Abstand zu dem Leuchtmittel **7** das von Leuchtmittel emittierte Licht derart auszurichten, dass parallele Strahlen mit vorzugsweise homogener Intensität an die Unterseite der Anzeigeeinheit eingeleitet werden können. In dem gezeigten Beispiel ist das lichtbündelnde Element als optische Linse ausgeführt. In anderen Ausführungsformen kann das lichtbündelnde optische Element auch als ein System aus mehreren Linsen zur Lichtkollimation und/oder einen Reflektor ausgeführt sein. Durch die Anordnung des lichtbündelnden Elements **6** in der Aussparung **10** und die damit einhergehende Kollimation des durch die Leuchtmittel **7** emittierten Lichtes wird erreicht, dass das kein Licht durch die Pixel der Anzeigeeinheit **4** transmittiert wird, dessen Einstrahlwinkel in die Lichtleitfasern **1** größer ist als der Einkoppelwinkel der Lichtleitfasern **1**. Somit wird eine hohe Einkoppeleffizienz erreicht.

Die Anzeigeeinheit **4** ist vorzugsweise ein Flat-Panel, das von den Leuchtmitteln **7** emittierte und von dem lichtbündelnden Element **6** kollimierte Licht durch seine Pixel transmittiert. So kann durch Ansteuerung einzelner Pixel kontrolliert werden, an welchen Stellen der den Leuchtmitteln **7** abgewandten Oberfläche **4a** der Anzeigeeinheit **4** in die dort vorhandenen Lichtleitfasern Licht eingekoppelt wird oder ob das Pixel für beispielsweise den Fall, dass über dem Pixel keine Lichtleitfaser angeordnet ist, inaktiv bleibt. Bevorzugt ist hierbei die Displayeinheit **4** als ein Dünnfilmtransistor-Flüssigkristalldisplay ausgeführt, welches die Vorteile einer niedrigen Einbauhöhe, geringen Gewichts und hoher Bildwiedergabequalität aufweist. Durch die Verwendung eines Dünnfilmtransistor-Flüssigkristalldisplays oder vergleichbarer Anzeigetechnologie wird eine Kalibrierung auf den Farbort bzw. den Weißpunkt der verwendeten Lichtleitfasern **1** und der Lichtintensität des einzukoppelnden Lichtes über individuelle Ansteuerung der einzelnen Pixel einer Faser ermöglicht.

Ob ein Pixel aktiv ist, also angesteuert wird, um Licht von einem Leuchtmittel zur Einkopplung in eine Lichtleitfaser zu transmittieren, oder, ob ein Pixel inaktiv ist, also aufgrund seiner Position in Relation zu den auf der Oberfläche der Anzeigeeinheit angebrachten Lichtleitfasern nicht zur Lichteinkopplung verwendet werden kann, wird im Rahmen eines im Folgenden beschriebenen Kalibrierungsschrittes festgelegt.

In besagtem Kalibrierungsschritt wird nach der Montage des Beleuchtungsmoduls **20** die Menge des am Faserende jeder einzelnen optischen Faser **1** ausgekoppelten Lichtes gemessen und somit festgestellt, in welche auf der Oberfläche **4a** der Anzeigeeinheit angebrachten Lichtleitfasern 1 das durch ein oder mehrere Pixel transmittierte Licht ohne einen bestimmten Grenzwert nicht überschreitende Verluste eingekoppelt wird. Mit anderen Worten, in dem Kalibrierungsschritt wird anhand individueller Ansteuerung jedes Pixels der Anzeigeeinheit bestimmt, welches Pixel beziehungsweise welche Pixel der Anzeigeeinheit **4** sich mit ihrer ganzen Fläche unter einer der Lichtleitfasern **1** befinden und somit ihr Licht in vollem Umfang zur Einkopplung in die Lichtleitfaser **1** bereitsteht. Dementsprechend kann im Zuge dessen, anhand der Intensität des am Faserende ausgekoppelten Lichtes auch bestimmt werden, ob sich ein Pixel unter dem Randbereich der Faser befindet, also nur Teile des transmittierten Lichts zur Einkopplung bereitstehen. Folglich ist es auch möglich, diejenigen Pixel zu bestimmen, die so gelegen sind, dass keine Lichtleitfaser zur Lichteinkopplung über ihnen vorhanden ist.

Dadurch ergibt sich der Vorteil, dass die Anbringung eines Bündels von Lichtleitfasern **1** auf der Oberfläche der Anzeigeeinheit **4** keine komplexen Voraussetzungen hinsichtlich der Platzierung der einzelnen Lichtleitfasern **1** mit sich bringt. Das Beleuchtungsmodul **20** kann folglich montiert werden und die Festlegung der Zuordnung der einzelnen Pixel der Anzeigeeinheit zu den jeweiligen Lichtleitfasern **1** kann im Nachhinein erfolgen. Somit kann die Ansteuerung eines Lichtpunktes beziehungsweise Sternes des dekorativen Dachhimmels durch die entsprechende Kalibrierung der Software, die die Anzeigeeinheit **4** steuert unter verringertem Aufwand implementiert werden.

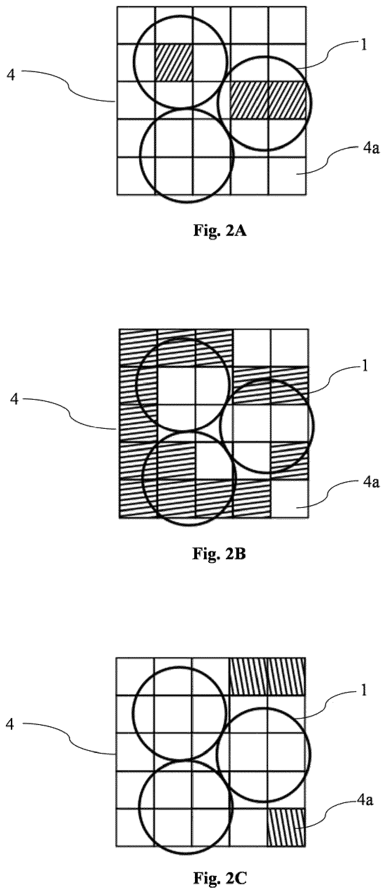

Beispielhafte Anordnungen von Pixeln unter den Lichtleitfasern **1** sind den Figuren 2A bis 2C und deren im Nachfolgenden gegebenen Beschreibungen zu entnehmen.

Als Lichtleitfasern **1** werden vorzugsweise Kunststofffasern oder Glasfasern eingesetzt. Die Ferrule **3** im Bereich der den Leuchtmitteln **7** abgewandten Oberfläche **4a** der Anzeigeeinheit **4** erleichtert das Einführen der Lichtleitfasern **1** und fungiert zugleich als Kelch für den Klebstoff **2**.

Die Lichtleitfasern **1** sind in Fig. 1 jeweils skizzenhaft abgeschnitten dargestellt. Die Länge der Lichtleitfasern **1** kann an den Anwendungszweck angepasst sein und wird im Wesentlichen lediglich von der geforderten Helligkeit am freien Ende der Faser begrenzt. Die Lichtleitfasern können wie in Figur 1 als ein geordnetes oder ungeordnetes Bündel auf der den Leuchtmitteln **7** abgewandten Oberfläche **4a** der Anzeigeeinheit **4** angeordnet sein, um dort das durch die Pixel der Anzeigeeinheit **4** transmittierte Licht einzukoppeln.

Somit ermöglicht die Einzelansteuerung von Pixeln oder einer Vielzahl von benachbarten Pixeln der Anzeigeeinheit **4** die Beleuchtung von einzelnen Punkten aus einer Vielzahl von Lichtpunkten zur Darstellung verschiedener Konstellationen oder dynamischer Effekte an der Auskoppelstelle bzw. dem Ende der Lichtleitfasern **1**.

Ein Durchmesser der Ferrule **3** ist bevorzugt minimal größer als der Durchmesser eines Bündels der Lichtleitfasern **1**, so dass ein Bündel von Lichtleitfasern **1** gerade hineinpasst und die Lichtleitfasern **1** zugleich rechtwinklig über den Pixeln der Anzeigeeinheit **4** ausgerichtet sind. Bevorzugt wird eine Spielpassung, bei der seitlich zwischen dem Bündel von Lichtleitfasern **1** und Innenwand der Ferrule/Faserhalterung **3** ein Spalt besteht, in den sich der Klebstoff **3** einsetzen kann.

Die Bündelung der Fasern ermöglicht dadurch die Optimierung des Bauraums und des Fertigungsaufwandes, da mehrere Lichtleitfasern **1** in einer Ferrule **3** zusammengefasst werden können.

Weiterhin ist eine in Fig. 1 gezeigte Halterung **5**, bevorzugt eine Isolationsplatte, zwischen der Platine **8** und der Anzeigeeinheit **4** angeordnet. Diese Halterung **5** weist zumindest eine Aussparung **10** auf, innerhalb derer jeweils zumindest ein Leuchtmittel **7** anordenbar ist. Die Halterung **5** kann beispielsweise einstückig ausgeführt sein, so dass es im Wesentlichen die Form einer Lochplatte hat, wobei die Löcher die Aussparungen **10** für die Leuchtmittel **7** sind. Weiterhin kann die Halterung **5** eine Vielzahl Einzelelemente aufweisen, z. B. einzelne Wandelemente, die ineinandergreifend derart angeordnet werden können, dass, für den Fall, dass das Beleuchtungsmodul **20** über eine Vielzahl von Leuchtmitteln **7** verfügt, jedes Leuchtmittel **7** jeweils einzeln in einer Aussparung **10** angeordnet ist. Teil der Halterung **5** kann ein Trennelement **9** sein, dass insbesondere verhindert, dass Streulicht (Fremdeinstrahlung) eines Leuchtmittels **7** in die einem anderen (benachbarten) Leuchtmittel **7** zugeordneten Pixel der Anzeigeeinheit **4** einfallen kann.

Die Anzeigeeinheit **4**, die Halterung **5** und die Platine **8** können im montierten Zustand fest miteinander verbunden sein, z. B. mittels einer Verschraubung, mittels Verklebung oder dgl.

Ferner ist festzustellen, dass die Halterung **5** und das Trennelement **9** bevorzugt aus Kunststoff oder Metall gefertigt sind. Besonders bevorzugt sind diese Elemente aus einem nicht transparenten Material gefertigt.

Figuren 2A bis 2C zeigen beispielhaft die Pixel-Faser-Zuordnung anhand von drei Fasern (Kreise) über einem Pixelraster (Rechtecke) der Anzeigeeinheit **4**. Figur 2A zeigt dementsprechend Pixel der Anzeigeeinheit **4**, die vollständig in eine einzelne Lichtleitfaser **1** einkoppeln. Diese Anordnung bietet den Vorteil, dass die Platzierung der Lichtleitfasern bzw. der Faserbündel **1** in Relation zu den Pixeln der Anzeigeeinheit mit höheren Fertigungstoleranzen bzw. geringerem Aufwand vorgenommen werden kann. Die nachfolgende Zuordnung mehrerer Pixel zu einer Lichtleitfaser **1** kann durch entsprechende Ansteuerung der Pixel gelöst werden. Durch die Zuordnung der Pixel der Anzeigeeinheit **4** zu den entsprechenden Lichtleitfasern **1** über eine softwareseitig durchgeführte Kalibrierung wird erreicht, dass nur Pixel ausgewählt und angesteuert werden deren Licht auch tatsächlich in eine Lichtleitfaser **1** einkoppelt.

Figur 2B zeigt Pixel der Anzeigeeinheit **4**, die teilweise in eine Lichtleitfaser **1** einkoppeln. Durch Einkopplung von Licht durch Pixel derAnzeigeeinheit **4** die sich an den Faserrändern befinden kann eine verbesserte Effizienz bei der Einkopplung des durch die Anzeigeeinheit **4** transmittierten Lichtes erreicht werden. Die Pixel an den Faserrändern können im Rahmen der Kalibrierung der Anzeigeeinheit den auf der Oberfläche **4a** der Anzeigeeinheit angeordneten Lichtleitfasern bzw. Faserbündel **1** angepasst werden, um eine gleichmäßige Einkopplung von Licht in die Lichtleitfasern **1** zu erreichen. Durch die nachträgliche Anpassung der Pixel and die Lichtleitfasern **1** im Rahmen der Kalibrierung können somit höhere Toleranzen bei der Fertigung des Beleuchtungsmoduls **20** und ein geringerer Fertigungsaufwand erreicht werden.

Figur 2C zeigt Pixel der Anzeigeeinheit **4**, die in keine Faser einkoppeln. Diese Pixel werden nicht angesteuert und deshalb kann das Austreten von Streulicht aus der Oberfläche der Anzeigeeinheit **4a** an Orten, an denen in keine Faser eingekoppelt werden kann, vermieden werden.

Zusammenfassend ist festzuhalten, dass die Erfindung eine kompaktere, verbesserte und leichter montierbare bzw. zusammenbaubare Vorrichtung zur Aufnahme von Lichtleitfasern bereitstellt, die mit geringerem Steuerungsaufwand eine separat geregelte Lichteinkopplung in eine einzelne Lichtleitfaser oder ein Bündel von Lichtleitfasern ermöglicht. Dies erlaubt es, verbesserte dekorative Lichtsysteme bereitzustellen, z. B. einen Sternenhimmel mit funkelnden farblich variablen Sternen.

## Patentansprüche

1. Beleuchtungsmodul umfassend:
ein Basiselement (8), auf dem zumindest ein Leuchtmittel (7) angeordnet ist;
ein lichtbündelndes Element (6), das dazu konfiguriert ist, das von dem Leuchtmittel (7) emittierte Licht zu kollimieren;
eine Anzeigeeinheit (4), die dem lichtbündelnden Element im Strahlengang des von dem Leuchtmittel (7) emittierten Lichts (6) nachgeschaltet ist und dazu konfiguriert ist, das von dem Leuchtmittel (7) emittierte Licht wahlweise in Lichtleitfasern (1) einzukoppeln; und
eine Vielzahl von Lichtleitfasern (1), wobei
zumindest ein Pixel der Anzeigeeinheit (4) einer Lichtleitfaser (1) zugeordnet ist.

2. Beleuchtungsmodul nach Anspruch 1, wobei der Faserdurchmesser einer Lichtleitfaser (1) die Pixelgröße der Anzeigeeinheit (4) übersteigt, und das abgestrahlte Licht einer Vielzahl von Pixeln in eine einzelne Lichtleitfaser (1) eingekoppelt wird.

3. Beleuchtungsmodul nach einem der vorhergehenden Ansprüche, wobei die Anzeigeeinheit (4) eine monochrome Flüssigkristallanzeige ist.

4. Beleuchtungsmodul nach einem der vorhergehenden Ansprüche, wobei die Anzeigeeinheit (4) eine mehrfarbige Flüssigkristallanzeige ist.

5. Beleuchtungsmodul nach einem der vorhergehenden Ansprüche, wobei das Leuchtmittel (7) eine lichtemittierende Diode ist.

6. Beleuchtungsmodul nach einem der vorhergehenden Ansprüche, wobei das Leuchtmittel (7) ein Multi-Chip LED ist oder mehrere LEDs umfasst.

7. Beleuchtungsmodul nach einem der vorhergehenden Ansprüche, wobei die Lichtleitfaser (1) ein Glasfaser-Lichtwellenleiter ist.

8. Beleuchtungsmodul nach einem der vorhergehenden Ansprüche, wobei die Lichtleitfaser (1) eine polymere optische Faser ist.

9. Beleuchtungsmodul nach einem der vorhergehenden Ansprüche, wobei eine Halterung (5) zur Aufnahme des lichtbündelnden Elements (6) zwischen dem Basiselement (8) und der Anzeigeeinheit (4) angeordnet ist.

10. Beleuchtungsmodul nach Anspruch 9, wobei die Halterung (5) ein Trennelement (9) aufweist, das dazu konfiguriert ist, das Leuchtmittel (7) lichtdicht einzufassen, und
das Leuchtmittel (7) einer von dem lichtbündelnden Element (6) und dem Trennelement (9) begrenzten Aussparung (10) der Halterung (5) zugeordnet ist.

11. Beleuchtungsmodul nach einem der vorhergehenden Ansprüche, wobei auf dem Basiselement (8) eine Vielzahl von Leuchtmitteln (7) angeordnet ist.

12. Beleuchtungsmodul nach Anspruch 11, wobei sich jeweils ein lichtbündelndes Element (6) in der Aussparung (10) über einem Leuchtmittel (7) befindet.

13. Beleuchtungsmodul nach einem der vorhergehenden Ansprüche, wobei eine Vielzahl von Lichtleitfasern (1) in einer Ferrule als Bündel angeordnet und auf der dem zumindest einen Leuchtmittel abgewandten Oberfläche (4a) der Anzeigeeinheit (4) befestigt sind.

14. Beleuchtungsmodul nach einem der vorhergehenden Ansprüche, wobei das von dem zumindest einen Leuchtmittel (7) emittierte Licht über eine Mischstrecke (11) an der dem Leuchtmittel zugewandten Oberfläche (4b) der Anzeigeeinheit (4) in die Anzeigeeinheit (4) eingeleitet wird.

15. Beleuchtungsmodul nach einem der vorhergehenden Ansprüche, wobei das lichtbündelnde Element (6) ein Reflektor und/oder zumindest eine optische Linse ist.
